# EUROPEAN PATENT SPECIFICATION

(11) **EP 1 186 184 B1**
(45) Date of publication and mention of the grant of the patent: **12.07.2006**
(21) Application number: 99920768.1
(22) Date of filing: 20.04.1999
(51) Int. Cl.: H04Q 7/22

(54) **INFORMATION COLLECTION METHOD AND SYSTEM**
VERFAHREN UND VORRICHTUNG ZUR INFORMATIONSSAMMLUNG
PROCEDE ET SYSTEME DE COLLECTE D'INFORMATION

(43) Date of publication of application: 13.03.2002
(73) Proprietor: Nokia Networks Oy, 02150 Espoo (FI)
(72) Inventor: USKELA, Sami, FIN-00530 Helsinki (FI)
(74) Representative: TBK-Patent
(86) International application number: PCT/EP1999/002767
(87) International publication number: WO 2000/064201

(56) References cited:
- WO-A-98/11744
- WO-A-98/25426
- US-A- 5 692 032

## Description

### FIELD OF THE INVENTION

The present invention relates to a method and a system for collecting an information from a user of a mobile communication network, such as a GSM (Global System for Mobile Communication) network.

### BACKGROUND OF THE INVENTION

With the introduction of the GSM communication standards, a number of special subscriber services are available to enable mobile subscribers to not only communicate data which represent voice, but also other unstructured data over the serving Public Land Mobile Network (PLMN). An example of such special subscriber services is the communication of data messages, i.e. unstructured data, between a mobile station and a serving mobile telecommunication network. Data messages like Short Message Service (SMS) messages are utilized to communicate text data between a serving mobile switching center (MSC) and a mobile station (MS). Using SMS messages, the serving MSC or any other connected node can transmit user information to the mobile station and have the mobile station store the received user information in an associated Subscriber Identity Module (SIM) card.

Another example of unstructured data communications comprises the Unstructured Supplementary Service Data (USSD) message. Using USSD message, a mobile telecommunication network is able to transparently communicate text data with an MS. For example, the MS may receive and display text messages on an attached display unit and subsequently return a response message back to the mobile network.

Recently, more versatile IN (Intelligent Network) services have emerged, which require more elaborated methods for collecting information from the user. Current solutions are based on pre-recorded voice announcements and collecting DTMF (Dual Tone Multi Frequency) signals from the user. This kind of interface is inconvenient while using a mobile phone, since the user has to listen to the announcements and dial digits in turn.

Document WO 98/25426 A2 discloses a system which allows a user of a mobile station to use IN services specific to his home network.

Document WO 98/17074 discloses an information collection method and system, wherein a serving mobile switching center informs a home location register (HLR) associated with a particular mobile station that the mobile station is no longer reachable. Thereafter, when a request for a routine information associated with an incoming call is received by the HLR, the HLR stores the directory number associated with the calling party subscriber. The HLR subsequently receives a location update signal or an IMSI (International Mobile Subscriber Identity) attach signal from a particular VLR informing the HLR of the mobile station's availability. The HLR then receives the stored directory number associated with the previously received incoming call and transmits it to the mobile station via a data message, such as an SMS message, a USSD message or GPRS data.

Thus, it is possible to send an arbitrary text string using a data message from the network to the user and vice-versa. However, only one parameter can be acquired from the user in one message pair. Moreover, the anticipated round-trip time is in the order of one to two seconds for USSD messages, and in the order of twelve to fifteen seconds for SMS messages. It is therefore inconvenient for the user to wait for responses, if there are several parameters required for the IN service or if there are validity checks to be performed for the acquired information.

### SUMMARY OF THE INVENTION

It is therefore an object of the present invention to provide a convenient and fast method and system for collecting an information from a user of a mobile telecommunication network.

This object is achieved by a method for collecting an information from a user of a mobile telecommunication network according to the features of claim 1.

Additionally, the above object is achieved by a system for collecting an information from a user of a mobile telecommunication system according to the features of claim 8.

Furthermore, the above object is achieved by a mobile terminal for a mobile communication network according to the features of claim 13.

Accordingly, by introducing a small parser into the terminal and using a coded information request, a plurality of information elements can be requested by a single coded information request since the structure of the coded information request can be defined by a corresponding code language. If an information is requested by an IN service, the network sends the coded information request to the terminal, the parser interprets it and acquires all information from the user at once. Thus, only one round-trip is required to collect all required information.

Preferably, the coded information request may be coded by using a markup language. Thereby, tags may be provided for the most needed information elements to thereby simplify the interpretation at the mobile terminal. Each tag may be used for a predetermined information element such as credit card number, a PIN, an account number, a user name, an E.163 number, an E.164 number, an IPv4 number, an IPv6 number, a DNS number, an URL and/or an SMTP address.

Furthermore, an information requested from said user according to the result of the interpretation may be acquired at the mobile terminal, a coded response message containing the acquired information may be generated and encapsulated into a data message and the data message containing the coded response message may be returned to the source of the coded information request via the corresponding data channel. Thus, all requested information can be incorporated into the single coded response message defined by the corresponding code language.

Preferably, a validity check of the acquired information can be performed before returning the coded response message. Thereby, an additional round-trip can be avoided, if the user enters an invalid information. The data message can preferably be a USSD message. Alternatively, an SMS message can be used which, however, requires a longer round-trip time.

### BRIEF DESCRIPTION OF THE DRAWINGS

In the following, the present invention will be described in greater detail on the basis of a preferred embodiment with reference to the accompanying drawings in which:
Fig. 1 shows a block diagram of a telecommunication network to which an IN service provider is connected in order to provide an IN service to a mobile station;
Fig. 2 shows a principle block diagram of a mobile terminal according to a preferred embodiment of the present invention;
Fig. 3 shows a flow diagram of a processing performed in a USSD parser provided in the mobile terminal according to the preferred embodiment of the present invention.

### DESCRIPTION OF THE PREFERRED EMBODIMENT

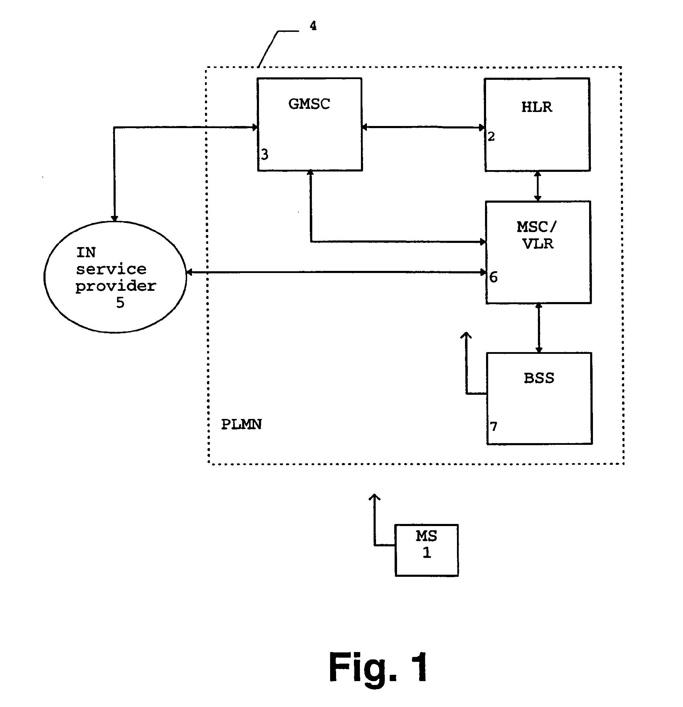

In the following, the preferred embodiment of the method and system according to the present invention will be described on the basis of a PLMN, as shown in Fig. 1.

Fig. 1 is a block diagram of a telecommunication network illustrating the network interconnection of a Public Land Mobile Network (PLMN) 4, to an IN service provider 5 such as a Service Control Point (SCP) which is a computer or a data base system executing service logic programs to provide customer services through a switching system. A mobile terminal of a mobile station (MS) 1 is associated with a particular PLMN as the home PLMN 4. Within each PLMN, e.g. home PLMN 4, there are a number of different mobile switching centers (MSCs) of which only one is shown in Fig. 1, for exemplary purposes, servicing the geographic area covered by the PLMN 4. Each MSC is further associated with a visitor location register (VLR) for storing necessary subscriber information related to the mobile subscriber traveling within its MSC coverage area. The MSC and the associated VLR are hereinafter referred to as MSC/VLR 6.

Each mobile station (only one is shown in Fig. 1) 1 within the home PLMN 4 is further assigned to a particular home location register (HLR) 2. The HLR 2 is a centralized data base storing subscriber information related to the MS 1. For example, the HLR 2 stores and maintains subscriber application data, preferred long distance carrier data and, more particularly, the identity of the MSC/VLR currently providing mobile service to the MS 1. Such an identity is later utilized by the PLMN 4 to determine the appropriate MSC/VLR currently serving the MS 1 and to properly reroute incoming calls to the called party MS 1.

Signaling for services such as an IN service is normally performed in a structured way. For example, specific predefined data, formats and signal names are used to setup a speech connection to perform handovers, and to authenticate mobile subscriber information when providing the IN service to a mobile subscriber. For this purpose, unstructured message protocols have been developed for the GSM system.

According to the unstructured data protocols, such as the SMS protocol or the USSD protocol, a data message comprising unstructured data is communicated between an external node such as the IN service provider 5 and the MS 1. Such unstructured data messages are utilized by the mobile telecommunications network to transport user defined data to a mobile station or to an application module within a mobile station. Therefore, the received data are either manipulated by a feature application module within the receiving MS 1 to provide special subscriber feature functions or display a display unit for user interaction. As a result, two parties within a mobile telecommunication network can utilize unstructured data messages to communicate text messages back and forth without establishing speech connection.

According to the preferred embodiment of the present invention, a USSD message encapsulating a coded information request is transmitted from the IN service provider 5 via a gateway GMSC 3 to the HLR 2 within the home PLMN 4. The HLR 2 then ascertains the current location of the MS 1, and a USSD handler provided in the HLR 2 transparently forwards the USSD message to the MSC/VLR 6 currently serving the MS 1. A USSD handler provided in the serving MSC/VLR 6 then receives the transmitted USSD message and forwards the USSD message to the MS 1 via a Base Station Subsystem (BSS) 7 covering the present location of the MS 1.

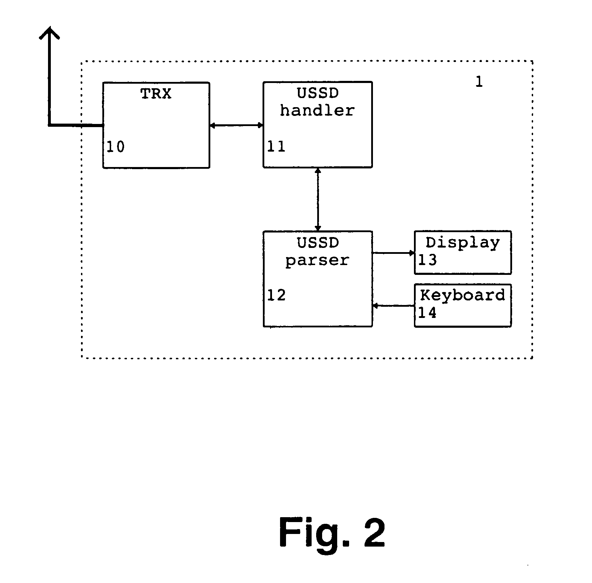

Fig. 2 shows a block diagram of the MS 1 according to the preferred embodiment of the present invention. The USSD message transmitted from the BSS 7 is received by a transceiver (TRX) 10 and forwarded to a USSD handler 11 which extracts the encapsulated coded information request and forwards it to a USSD parser 12 arranged to interpret the coded information request.

The coded information request may be coded by using a markup language which can be very simple and may contain tags for predetermined information elements, such as a credit card number, a PIN (Personal Identification Number), an account number, a user name, an addressing number such as an E.163 number or an E.164 number, a protocol number such as an IPv4 number or an IPv6 number, a server number such as a DNS (Domain Name Server) number, a document address such as a URL (Uniform Resource Locator), and/or an SMTP (Simple Mail Transfer Protocol) address, and the like. Having interpreted the coded information request and derived the request information elements, the USSD parser 12 controls a display 13 provided at the MS 1 to display a corresponding message to the user of the MS 1. In response to the displayed message, the user inputs the requested information by using a keyboard 14, and the USSD parser 12 reads and stores the input information in a corresponding register or other memory means. Of course, any other known output and/or input means may be used for acquiring the requested information.

Thereafter, the USSD parser 12 may perform a validity check of the information received from the user. Such a validity check may be based on criteria defining that the PIN must be longer than four digits or the credit card number must contain only numerical values. Thereby, an additional message round-trip can be avoided, if the entered information is not valid.

Then, the USSD parser 12 generates a USSD reply message coded according to the markup language and supplies the coded USSD reply message to the USSD handler 11. The USSD handler 11 generates a USSD message and forwards it to the TRX 10 in order to be transmitted to the serving MSC/VLR 6 which forwards the USSD response message via the HLR 2 and the GMSC 3 to the IN service provider 5.

Thus, all information acquired by the IN service provider 5 is collected in a fast and convenient manner by using a single USSD message. The USSD message contains an application-wide data entry form which defines the kind of fields and the order for the information elements. The collected information elements may be compressed in the response message to thereby reduce their data amount.

The data message used for encapsulating the coded information request and the coded response message may also be an SMS message. However, as already mentioned, in this case a round-trip time of about 12 to 14 seconds is required for a collection of the information.

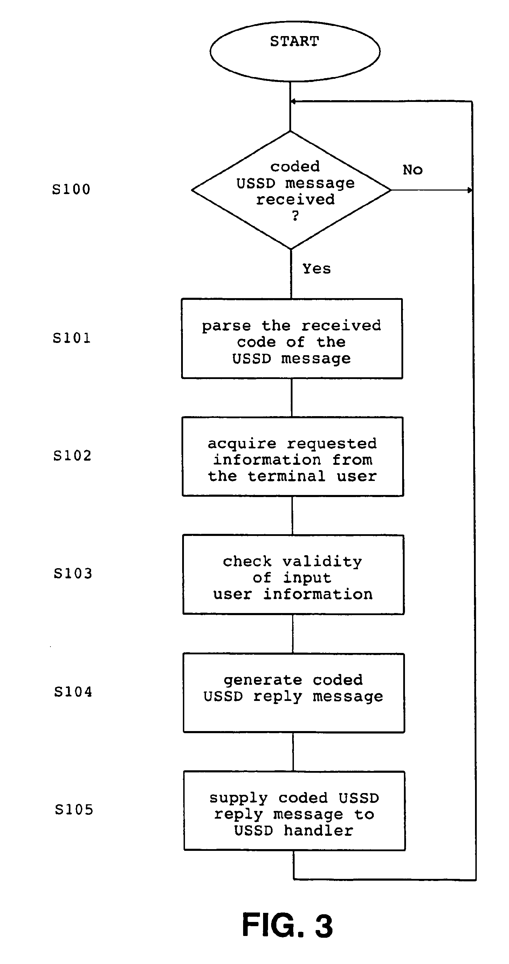

In the following, a credit card calling is described as an example for the information collection according to the preferred embodiment of the present invention, wherein the processing of the USSD parser 12 is described on the basis of a flow diagram shown in Fig. 3.

Initially, the user of the MS 1 performs a calling procedure of a desired service number. Then, the desired IN service is triggered by the serving MSC/VLR 6.

According to Fig. 3, the USSD parser 12 performs a waiting loop until a coded USSD message is received in step S100 from the IN service provider 5.

An example of the received coded USSD message is given as follows:
*<requestID:01><inputCreditCardNumber><inputPIN: 4 digits> <select:VISA,Diners,AMEX>*

Having received the coded USSD message, the USSD parser 12 parses (interprets) the received coded message in order to derive the requested information elements. In the present example, a credit card number and a PIN number, and a card type information are requested. The card type information is selected from the list indicated in the message, i.e. VISA, Diners or AMEX.

Then, in step S102, the USSD parser 12 acquires the requested information from the terminal user by using the display 13 and the keyboard 14.

Having received the required information from the user, the USSD parser 12 performs initial checks for the input information. In particular, the USSD parser 12 knows that the credit card number comprises fourteen digits. Furthermore, the coded request message includes an information that the PIN should comprise four digits and that the user should select the VISA, the Diners or the AMEX card.

If the validity check performed in step S103 indicates that the input information is invalid, the USSD parser 12 informs the user of the invalid information by using the display 13 and requests to repeat the input procedure.

In case a valid information has been determined in step S103, the USSD parser 12 generates a coded USSD reply message in step S104. The reply message may be structured as follows:
*<replyID:01><1234 123456 1234><9876><VISA>*

Thus, the coded USSD reply message indicates that the credit card number is '1234 123456 1234' and that the user has selected the VISA card having a PIN '9876'.

Then, in step S105, the coded USSD reply message is supplied to the USSD handler 11 and transmitted via the TRX 10 and the PLMN 4 to the IN service provider 5 which continues the service execution with the received information.

Accordingly, all required information elements, i.e. credit card number, type of card and PIN are transmitted within one USSD message, such that only one round-trip is required for the whole procedure.

It is to be pointed out that the information collection method and system described in the preferred embodiment can be applied in any mobile communication network and by using any data message. The above description of the preferred embodiment and the accompanying drawings are only intended to illustrate the present invention. The preferred embodiment of the invention may thus vary within the scope of the attached claims.

In summary, a method and a system for collecting an information from a user of a mobile telecommunication network is described, wherein a parser is introduced into a mobile terminal such that a coded information request message can be transmitted in a data message, such as a USSD message. The parser interprets the message and acquires all information from the user. Thus, a fast and user-friendly solution for information collection from a subscriber is provided. The parser generates a coded response message containing all required information and may perform a validity check for the information received from the user. Thereby, a round-trip is avoided if the user entered an invalid information. Accordingly, all required information can be collected by a single round-trip of the data message.

## Claims

1. A method for collecting an information from a user of a mobile telecommunication network **(4)** comprising the steps of:
a) generating a coded information request, said coded information request requesting a plurality of predetermined information elements;
b) encapsulating said coded information request into a data message;
c) transmitting said data message containing said encapsulated coded information request via a corresponding data channel of said mobile telecommunication network to a mobile terminal **(1)** of said user;
d) providing at said mobile terminal **(1)** a parser function for interpreting said coded information request; **characterized by**:
e) acquiring, from said user, information requested according to the result of said interpretation, the acquired information containing information for the plurality of predetermined information elements,
generating a coded response message containing said acquired information,
encapsulating said coded response message into a data message, and
returning said data message containing said coded response message to the source of said coded information request.

2. A method according to claim 1, wherein said coded information request is coded by using a markup language.

3. A method according to claim 1 or 2, wherein said coded information request contains tags for a plurality of predetermined information elements.

4. A method according to claim 3, wherein said plurality of predetermined information elements comprise a credit card number, a PIN, an account number, a user name, an E.163 number, an E.164 number, an IPv4 number, an IPv6 number, a DNS number, an URL and/or an SMTP address.

5. A method according to any one of the preceding claims, further comprising the steps of:
returning said data message containing said coded response message to the source of said coded information request via said corresponding data channel.

6. A method according to claim 5, further comprising the step of performing a validity check of said acquired information before said returning step.

7. A method according to anyone of the preceding claims, wherein said data message is a USSD message or an SMS message.

8. A system for collecting an information from a user of a mobile telecommunication network **(4)** comprising:
a) transmitting means **(5)** for generating a coded information request, encapsulating the coded information request into a data message, and transmitting the data message containing said coded information request via a corresponding data channel of said mobile telecommunication network **(4)** to a mobile terminal **(1)** of said user, said coded information request requesting a plurality of predetermined information elements; and
b) parser means **(12)** arranged at said mobile terminal **(1)** and adapted to interpret said coded information request,
**characterized in that** said parser means **(12)** is arranged
to acquire from said user an information requested according to the result of said interpretation, the acquired information containing information for the plurality of predetermined information elements,
to generate a coded response message containing said acquired information, to encapsulate said generated coded response message into a data message and
to return said data message containing said coded response message to said transmitting means **(5).**

9. A system according to claim 8, wherein said transmitting means **(5)** is arranged to generate said coded information request by using a markup language.

10. A system according to claim 8 or 9, wherein said parser means **(12)** is arranged to return said data message containing said coded response message to said transmitting means **(5)** via said corresponding data channel.

11. A system according to claim 10, wherein said parser means **(12)** is adapted to perform a validity check of said acquired information.

12. A system according to anyone of claims 8 to 11, wherein said data message is a USSD message or an SMS message.

13. A mobile terminal **(1)** for a mobile communication network **(4)** comprising:
a) receiving means **(10)** for receiving a data message;
b) message handling means **(11)** for extracting a coded information request encapsulated into said data message, the information request requesting a plurality of predetermined information elements, and
c) parser means **(12)** for interpreting said extracted coded information request,
**characterized in that** said parser means **(12)** is arranged to acquire from a user of said mobile terminal via an input means **(14)** an information requested according to the result of said interpretation, to generate a coded response message containing said acquired information, to encapsulate said generated coded response message into a data message, and to supply said data message containing said coded response message to said message handling means **(11).**

14. A mobile terminal according to claim 13, wherein said parser means **(12)** is adapted to perform a validity check of said acquired information.

15. A mobile terminal according to claim 13 or 14, wherein said data message is a USSD message or an SMS message.

## Patentansprüche

1. Verfahren zum Erheben einer Information von einem Benutzer eines Mobiltelekommunikationsnetzwerks (4), mit den Schritten:
a) Erzeugen einer codierten Informationsanforderung, wobei die codierte Informationsanforderung eine Vielzahl von vorbestimmten Informationselementen anfordert;
b) Einkapseln der codierten Informationsanforderung in eine Datennachricht;
c) Übertragen der Datennachricht, die die eingekapselte codierte Informationsanforderung enthält, über einen entsprechenden Datenkanal des Mobiltelekommunikationsnetzwerks an ein Mobilendgerät (1) des Benutzers;
d) Bereitstellen einer Parserfunktion zum Interpretieren der codierten Informationsanforderung an dem Mobilendgerät (1);
**gekennzeichnet durch**:
e) Erfassen von Informationen von dem Benutzer, die gemäß dem Ergebnis der Interpretation angefordert werden, wobei die erfassten Informationen Informationen für die Vielzahl von vorbestimmten Informationselementen enthalten,
Erzeugen einer codierten Antwortnachricht, die die erfassten Informationen enthält,
Einkapseln der codierten Antwortnachricht in eine Datennachricht, und
Zurückgeben der Datennachricht, die die codierte Antwortnachricht enthält, an die Quelle der codierten Informationsanforderung.

2. Verfahren gemäß Anspruch 1, bei dem die codierte Informationsanforderung durch Verwendung einer Auszeichnungssprache codiert ist.

3. Verfahren gemäß Anspruch 1 oder 2, bei dem die codierte Informationsanforderung Marken für eine Vielzahl von vorbestimmten Informationselementen enthält.

4. Verfahren gemäß Anspruch 3, wobei die Vielzahl von vorbestimmten Informationselementen aufweist: eine Kreditkartennummer, eine PIN, eine Benutzerkontonummer, einen Benutzernamen, eine E.163-Nummer, eine E.164-Nummer, eine IPv4-Nummer, eine IPv6-Nummer, eine DNS-Nummer, eine URL- und/oder eine SMTP-Adresse.

5. Verfahren gemäß einem der vorhergehenden Ansprüche, zusätzlich mit dem Schritt:
Zurückgeben der Datennachricht, die die codierte Antwortnachricht enthält, an die Quelle der codierten Informationsanforderung über den entsprechenden Datenkanal.

6. Verfahren gemäß Anspruch 5, zusätzlich mit dem Schritt zum Durchführen einer Gültigkeitsprüfung der erfassten Informationen vor dem Zurückgabeschritt.

7. Verfahren gemäß einem der vorhergehenden Ansprüche, wobei die Datennachricht eine USSD-Nachricht oder eine SMS-Nachricht ist.

8. System zur Erhebung einer Information von einem Benutzer eines Mobiltelekommunikationsnetzwerks (4), mit:
a) einer Übertragungseinrichtung (5) zum Erzeugen einer codierten Informationsanforderung, Einkapseln der codierten Informationsanforderung in eine Datennachricht und Übertragen der Datennachricht, die die codierte Informationsanforderung enthält, über einen entsprechenden Datenkanal des Mobiltelekommunikationsnetzwerks (4) an ein Mobilendgerät (1) des Benutzers, wobei die codierte Informationsanforderung eine Vielzahl von vorbestimmten Informationselementen anfordert; und
b) einer Parsereinrichtung (12), die an dem Mobilendgerät (1) angeordnet ist und angepasst ist, die codierte Informationsanforderung zu interpretieren,
**dadurch gekennzeichnet, dass** die Parsereinrichtung (12) eingerichtet ist zum:
Erfassen von Informationen von dem Benutzer, die gemäß dem Ergebnis der Interpretation angefordert werden, wobei die erfassten Informationen Informationen für die Vielzahl von vorbestimmten Informationselementen enthalten,
Erzeugen einer codierten Antwortnachricht, die die erfassten Informationen enthält, zum Einkapseln der erzeugten codierten Antwortnachricht in eine Datennachricht, und
Zurückgeben der Datennachricht, die die codierte Antwortnachricht enthält, an die Übertragungseinrichtung (5).

9. System gemäß Anspruch 8, bei dem die Übertragungseinrichtung (5) eingerichtet ist zum Erzeugen der codierten Informationsanforderung durch Verwendung einer Auszeichnungssprache.

10. System gemäß Anspruch 8 oder 9, bei dem die Parsereinrichtung (12) eingerichtet ist zum Zurückgeben der Datennachricht, die die codierte Antwortnachricht enthält, an die Übertragungseinrichtung (5) über den entsprechenden Datenkanal.

11. System gemäß Anspruch 10, bei dem die Parsereinrichtung (12) angepasst ist zum Durchführen einer Gültigkeitsprüfung der erfassten Informationen.

12. System gemäß einem der Ansprüche 8 bis 11, wobei die Datennachricht eine USSD-Nachricht oder eine SMS-Nachricht ist.

13. Mobilendgerät (1) für ein Mobilkommunikationsnetzwerk (4), mit:
a) einer Empfangseinrichtung (10) zum Empfangen einer Datennachricht;
b) einer Nachrichtenbearbeitungseinrichtung (11) zum Extrahieren einer codierten Informationsanforderung, die in die Datennachricht eingekapselt ist, wobei die Informationsanforderung eine Vielzahl von vorbestimmten Informationselementen anfordert, und
c) einer Parsereinrichtung (12) zum Interpretieren der extrahierten codierten Informationsanforderung,
**dadurch gekennzeichnet, dass**
die Parsereinrichtung (12) eingerichtet ist zum Erfassen von Informationen, die gemäß dem Ergebnis der Interpretation angefordert werden, über eine Eingabeeinrichtung (14) von einem Benutzer des Mobilendgeräts, zum Erfassen einer codierten Antwortnachricht, die die erfassten Informationen enthält, zum Einkapseln der erzeugten codierten Antwortnachricht in eine Datennachricht, und zum Liefern der Datennachricht, die die codierte Antwortnachricht enthält, an die Nachrichtenbearbeitungseinrichtung (11).

14. Mobilendgerät gemäß Anspruch 13, bei dem die Parsereinrichtung (12) angepasst ist zum Durchführen einer Gültigkeitsprüfung der erfassten Informationen.

15. Mobilendgerät gemäß Anspruch 13 oder 14, wobei die Datennachricht eine USSD-Nachricht oder eine SMS-Nachricht ist.

## Revendications

1. Procédé de collecte d'informations à propos d'un utilisateur d'un réseau de télécommunications mobiles (4) comprenant les étapes consistant à :
a) générer une demande d'informations codée, ladite demande d'informations codée demandant une pluralité d'éléments d'information prédéterminés ;
b) encapsuler ladite demande d'informations codée à l'intérieur d'un message de données ;
c) transmettre ledit message de données contenant ladite demande d'informations codée encapsulée par le biais d'un canal de données correspondant dudit réseau de télécommunications mobiles vers un terminal mobile (1) dudit utilisateur;
d) prévoir au niveau dudit terminal mobile (1) une fonction d'analyse pour interpréter ladite demande d'informations codée, **caractérisé par** les étapes consistant à :
e) acquérir, à propos dudit utilisateur, des informations demandées en fonction du résultat de ladite interprétation, les informations acquises contenant des informations pour la pluralité d'éléments d'information prédéterminés ;
générer un message de réponse codé contenant lesdites informations acquises ; encapsuler ledit message de réponse codé à l'intérieur d'un message de données ; et
renvoyer ledit message de données contenant ledit message de réponse codé vers la source de ladite demande d'informations codée.

2. Procédé selon la revendication 1, dans lequel ladite demande d'informations codée est codée en utilisant un langage de balisage.

3. Procédé selon la revendication 1 ou 2, dans lequel ladite demande d'informations codée contient des balises pour une pluralité d'éléments d'information prédéterminés.

4. Procédé selon la revendication 3, dans lequel ladite pluralité d'éléments d'information prédéterminés comprend un numéro de carte de crédit, un code PIN, un numéro de compte, un nom d'utilisateur, un numéro E.163, un numéro E.164, un numéro IPv4, un numéro IPv6, un numéro de DNS, une URL et/ou une adresse SMTP.

5. Procédé selon l'une quelconque des revendications précédentes, comprenant en outre les étapes consistant à :
renvoyer ledit message de données contenant ledit message de réponse codé vers la source de ladite demande d'informations codée par le biais dudit canal de données correspondant.

6. Procédé selon la revendication 5, comprenant en outre l'étape consistant à réaliser un contrôle de validité desdites informations acquises avant d'exécuter ladite étape de renvoi.

7. Procédé selon l'une quelconque des revendications précédentes, dans lequel ledit message de données est un message USSD ou un message SMS.

8. Système de collecte d'informations à propos d'un utilisateur d'un réseau de télécommunications mobiles (4) comprenant :
a) des moyens de transmission (5) pour générer une demande d'informations codée, encapsuler la demande d'informations codée à l'intérieur d'un message de données, et transmettre le message de données contenant ladite demande d'informations codée par le biais d'un canal de données correspondant dudit réseau de télécommunications mobiles (4) vers un terminal mobile (1) dudit utilisateur, ladite demande d'informations codée demandant une pluralité d'éléments d'information prédéterminés ; et
b) des moyens d'analyse (12) prévus au niveau dudit terminal mobile (1) et adaptés pour interpréter ladite demande d'informations codée ; **caractérisé en ce que** lesdits moyens d'analyse (12) sont configurés de façon :
à acquérir, à propos dudit utilisateur, des informations demandées en fonction du résultat de ladite interprétation, les informations acquises contenant des informations pour la pluralité d'éléments d'information prédéterminés ;
à générer un message de réponse codé contenant lesdites informations acquises ; à encapsuler ledit message de réponse codé généré à l'intérieur d'un message de données ; et
à renvoyer ledit message de données contenant ledit message de réponse codé vers lesdits moyens de transmission (5).

9. Système selon la revendication 8, dans lequel lesdits moyens de transmission (5) sont configurés de façon à générer ladite demande d'informations codée en utilisant un langage de balisage.

10. Système selon la revendication 8 ou 9, dans lequel lesdits moyens d'analyse (12) sont configurés de façon à renvoyer ledit message de données contenant ledit message de réponse codé vers lesdits moyens de transmission (5) par le biais dudit canal de données correspondant.

11. Système selon la revendication 10, dans lequel lesdits moyens d'analyse (12) sont adaptés pour exécuter un contrôle de validité sur lesdites informations acquises.

12. Système selon l'une quelconque des revendications 8 à 11, dans lequel ledit message de données est un message USSD ou un message SMS.

13. Terminal mobile (1) pour un réseau de télécommunications mobiles (4) comprenant :
a) des moyens de réception (10) pour recevoir un message de données ;
b) des moyens de traitement de message (11) pour extraire une demande d'informations codée encapsulée à l'intérieur dudit message de données, la demande d'informations demandant une pluralité d'éléments d'information prédéterminés ; et
c) des moyens d'analyse (12) pour interpréter ladite demande d'informations codée extraite ; **caractérisé en ce que** lesdits moyens d'analyse (12) sont configurés de façon à acquérir, à propos d'un utilisateur dudit terminal mobile, par le biais de moyens d'entrée (14), des informations demandées en fonction du résultat de ladite interprétation, à générer un message de réponse codé contenant lesdites informations acquises, à encapsuler ledit message de réponse codé produit à l'intérieur d'un message de données, et à transférer ledit message de données contenant ledit message de réponse codé vers lesdits moyens de traitement de message (11).

14. Terminal mobile selon la revendication 13, dans lequel lesdits moyens d'analyse (12) sont adaptés pour exécuter un contrôle de validité sur lesdites informations acquises.

15. Terminal mobile selon la revendication 13 à 14, dans lequel ledit message de données est un message USSD ou un message SMS.
